# EUROPEAN PATENT SPECIFICATION

(11) **EP 3 421 793 B1**
(45) Date of publication and mention of the grant of the patent: **18.12.2019**
(21) Application number: 18188883.5
(22) Date of filing: 05.03.2009
(51) Int. Cl.: F04B 39/00, C09K 5/04, C10M 105/38, C10M 107/20, C10M 107/24, F04C 29/00, F25B 1/00, C10N 20/00, C10N 20/02, C10N 30/00, C10N 40/30, F04B 39/02, C10M 171/00, F04C 23/00, F04C 18/02, F25B 9/00

(54) **REFRIGERATION APPARATUS**
KÜHLVORRICHTUNG
APPAREIL DE RÉFRIGÉRATION

(30) Priority: 18.03.2008 JP 2008070238
(43) Date of publication of application: 02.01.2019
(62) Divisional of application: 09721969.5
(73) Proprietor: Daikin Industries, Ltd., Osaka-shi, Osaka 530-8323 (JP)
(72) Inventor: Matsuura, Hideki, Osaka, 592-8331 (JP); Tanaka, Masaru, Osaka, 592-8331 (JP); Hara, Hideki, Osaka, 592-8331 (JP); Shibaike, Kouji, Shiga, 525-8526 (JP); Ohnuma, Youichi, Shiga, 525-8526 (JP)
(74) Representative: Hoffmann Eitle

(56) References cited:
- EP-A1- 1 176 182
- CA-A1- 2 564 023
- JP-A- H0 593 198
- JP-A- 2006 274 057
- US-A- 5 956 959
- US-A1- 2004 144 952
- US-B1- 6 189 322

## Description

### TECHNICAL FIELD

The present invention relates to a refrigeration apparatus including a refrigerant circuit and a refrigerant circulating in the refrigerant circuit by a compressor to perform a refrigeration cycle.

### BACKGROUND ART

Conventionally, a refrigeration apparatus including a refrigerant circuit in which a refrigeration cycle is performed has been broadly applied to an air conditioning system, a hot-water supply system, etc.

Patent Document 1 discloses the refrigeration apparatus of this type. The refrigeration apparatus includes a refrigerant circuit in which a compressor, a condenser, an expansion valve, and an evaporator are connected together to perform a refrigeration cycle. In the refrigerant circuit, refrigerant compressed by the compressor is condensed by releasing heat to air in the condenser. The pressure of the refrigerant condensed in the condenser is reduced by the expansion valve, and then such refrigerant is evaporated in the evaporator. The evaporated refrigerant is sucked into and recompressed in the compressor.

Refrigerant represented by Molecular Formula 1: C₃HₘFₙ (note that "m" and "n" are integers equal to or greater than 1 and equal to or less than 5, and a relationship represented by an expression m + n = 6 is satisfied) and having a single double bond in a molecular structure is used for the refrigerant circuit of Patent Document 1. It has been known that such refrigerant does not contain chlorine and bromine atoms, and has a small influence on destruction of the ozone layer.

Patent Document 2 (CA 2 564 023 A1) discloses azeotrope-like compositions comprising tetrafluoropropene and trifluoroiodomethane and suggests using them in refrigerant compositions, refrigeration systems, blowing agent composition as well as in sprayable compositions.

Patent Document 3 (US 6 189 322 B1) discloses a refrigerant-circulating system, which comprises a refrigeration cycle comprising a refrigerant compressor, a condenser, an expansion mechanism and an evaporator to form a refrigerant circuit and employing as refrigerant a saturated hydro fluoro carbon.

Patent Document 4 (JP H05 93198 A) discloses a refrigerating cycle comprising a compressor, a condenser and further involving an oil separator and/or a hot gas line. As refrigerant, a saturated hydrofluorocarbon is used.

Patent Document 5 (US 5 956 959 A) discloses a refrigerant compressor being configured such that a compressor unit is installed in a hermetically sealed container using an HFC type refrigerant or a mixture thereof and a refrigerator oil having compatibility with the refrigerant.

### CITATION LIST

### PATENT DOCUMENT

PATENT DOCUMENT 1: Japanese Patent Application No. 04-110388
PATENT DOCUMENT 2: CA 2 564 023 A1
PATENT DOCUMENT 3: US 6 189 322 B1
PATENT DOCUMENT 4: JP H05 93198 A
PATENT DOCUMENT 5: US 5 956 959 A

### SUMMARY OF THE INVENTION

### TECHNICAL PROBLEM

The refrigerant disclosed in Patent Document 1 has a relatively-unstable molecular structure such as the structure having the double bond. Thus, the refrigerant may be deteriorated due to a long-term refrigeration cycle, resulting in generation of impurities etc. When generating such impurities, e.g., functional resin components such as a sliding member of a movable scroll of the compressor and a sealing member are likely to be deteriorated due to the influence of the impurities. Consequently, there is a possibility that durability and reliability of such functional components are degraded.

The present invention has been made in view of the foregoing, and it is an object of the present invention to reduce deterioration of predetermined functional resin component(s) arranged so as to contact refrigerant in a refrigeration apparatus including a refrigerant circuit for which single component refrigerant containing refrigerant represented by Molecular Formula 1: C₃HₘFₙ (note that "m" and "n" are integers equal to or greater than 1 and equal to or less than 5, and a relationship represented by an expression m + n = 6 is satisfied) and having a single double bond in a molecular structure, or refrigerant mixture containing such refrigerant is used.

### SOLUTION TO THE PROBLEM

A first aspect of the invention is intended for a refrigeration apparatus including a refrigerant circuit (10) a refrigerant circulating in the refrigerant circuit by a compressor (30) to perform a refrigeration cycle; in which, as refrigerant of the refrigerant circuit (10), refrigerant represented by Molecular Formula 1: C₃HₘFₙ (note that "m" and "n" are integers equal to or greater than 1 and equal to or less than 5, and a relationship represented by an expression m + n = 6 is satisfied) and having a single double bond in a molecular structure, or refrigerant mixture containing the refrigerant is used. In the refrigeration apparatus, predetermined functional resin components (61, 62, 63, 64, 65) arranged so as to contact the refrigerant of the refrigerant circuit (10) are made of any of polytetrafluoroethylene, polyphenylene sulfide, phenolic resin, polyamide resin, chloroprene rubber, silicone rubber, hydrogenated nitrile rubber, fluorine-containing rubber, and hydrin rubber. The refrigeration apparatus further comprises refrigerant oil used in the compressor (30), which has a saturated water amount of equal to or greater than 2000 ppm at a temperature of 30°C and a relative humidity of 90%, wherein the refrigerant oil mainly contains at least one of polyalkylene glycol, polyol ester, and polyvinyl ether, and wherein the refrigerant oil has a surface tension of equal to or greater than 0.02 N/m and equal to or less than 0.04 N/m at 20°C.

Furthermore, the refrigerant oil contains a phenol antioxidizing agent or an amine antioxidizing agent. This stabilizes refrigerant or the refrigerant oil, thereby reducing the generation of impurities. Consequently, the durability/reliability of the functional resin components (61, 62, 63, 64, 65) can be further improved.

In the refrigeration apparatus of the first aspect of the invention, as the refrigeration of the refrigerant circuit (10), the refrigerant represented by Molecular Formula 1 and having the single double bond in the molecular structure, or the refrigerant mixture containing such refrigerant is used. The refrigerant is compressed by the compressor (30) to perform the refrigeration cycle in the refrigerant circuit (10).

The predetermined functional resin components (61, 62, 63, 64, 65) are arranged so as to contact the refrigerant of the refrigerant circuit (10). The functional resin components (61, 62, 63, 64, 65) are made of any of polytetrafluoroethylene, polyphenylene sulfide, phenolic resin, polyamide resin, chloroprene rubber, silicone rubber, hydrogenated nitrile rubber, fluorine-containing rubber, and hydrin rubber. Such resin materials have relatively-high stability to impurities generated from refrigerant. Consequently, deterioration of the functional resin components due to the generation of impurities is reduced.

A second aspect of the invention is intended for the refrigeration apparatus of the first aspect of the invention, in which the phenol antioxidizing agent contains any of: 2, 6-di-tert-butyl-4-methylphenol (DBPC); 2, 6-di-tert-butyl-4-ethylphenol; 2, 2'-methylenebis(4-methyl-6-tert-butylphenol); 2, 4-dimethyl-6-tert-butylphenol; and 2, 6-di-tert-butylphenol.

A third aspect of the invention is intended for the refrigeration apparatus of the first aspect of the invention, in which the amine antioxidizing agent contains any of: N, N'-diisopropyl-p-phenylenediamine; N, N'-di-sec-butyl-p-phenylenediamine; phenyl-α-naphthylamine; and N, N'-di-phenyl-p-phenylenediamine.

A fourth aspect of the invention is intended for the refrigeration apparatus of any of the first to third aspects of the invention, in which the proportion of the antioxidizing agent is equal to or greater than 0.01% by mass and equal to or less than 5% by mass.

A fifth aspect of the invention is intended for the refrigeration apparatus of any of the first to fourth aspects of the invention, in which the functional resin component is a sliding member (61-64) provided in a predetermined sliding section, and the sliding member (61-64) is made of any of polytetrafluoroethylene, polyphenylene sulfide, and polyamide resin.

In the fifth aspect of the invention, the sliding member (61-64) provided in the sliding section is the functional resin component. The sliding member (61-64) is made of any of polytetrafluoroethylene, polyphenylene sulfide, and polyamide resin. Thus, denaturalization/deterioration of the sliding member (61-64) due to impurities generated from refrigerant is reduced.

A sixth aspect of the invention is intended for the refrigeration apparatus of any of the first to fifth aspects of the invention, in which the functional resin component is a sealing member (65) for reducing or preventing a leakage of refrigerant in a predetermined clearance, and the sealing member (65) is made of any of polytetrafluoroethylene, polyphenylene sulfide, chloroprene rubber, silicone rubber, hydrogenated nitrile rubber, fluorine-containing rubber, and hydrin rubber.

In the sixth aspect of the invention, the sealing member (65) for reducing or preventing the leakage of refrigerant in the predetermined clearance is the functional resin component. The sealing member (65) is made of any of polyphenylene sulfide, chloroprene rubber, silicone rubber, hydrogenated nitrile rubber, fluorine-containing rubber, and hydrin rubber. Thus, denaturalization/deterioration of the sealing member (65) due to impurities generated from refrigerant is reduced.

In the invention, as the refrigerant oil of the compressor (30), a refrigerant oil is used, which has the saturated water amount of equal to or greater than 2000 ppm at the temperature of 30°C and the relative humidity of 90%. That is, in the present invention, refrigerant oil having relatively-high hygroscopic properties is used. This allows the refrigerant oil to trap moisture in refrigerant. Consequently, deterioration of refrigerant due to moisture is reduced.

In the invention, as the refrigerant oil, a refrigerant oil mainly containing at least one of polyalkylene glycol, polyol ester, and polyvinyl ether is used. Such refrigerant oils have compatibility with the refrigerant represented by Molecular Formula 1 and having the single double bond in the molecular structure, and therefore such refrigerant is easily dissolved with the refrigerant oil.

When generating impurities due to the deterioration of refrigerant as described above, the refrigerant oil of the present invention may be also deteriorated due to such impurities. Thus, impurities are further generated due to the deterioration of the refrigerant oil, and therefore the functional resin components (61, 62, 63, 64, 65) are likely to be deteriorated due to impurities derived from the refrigerant oil. However, in the present invention, any of polytetrafluoroethylene, polyphenylene sulfide, phenolic resin, polyamide resin, chloroprene rubber, silicone rubber, hydrogenated nitrile rubber, fluorine-containing rubber, and hydrin rubber is used for the functional resin components (61, 62, 63, 64, 65), thereby avoiding the deterioration of the functional resin components (61, 62, 63, 64, 65) due to impurities generated from the refrigerant oil.

A seventh aspect of the invention is intended for the refrigeration apparatus of any of the first to fifth aspects of the invention, in which the refrigerant oil has kinetic viscosity of equal to or greater than 30 cSt and equal to or less than 400 cSt at 40°C, and a fluid point of equal to or less than -30°C.

In the seventh aspect of the invention, the kinetic viscosity of the refrigerant oil is equal to or greater than 30 cSt at 40°C, and therefore insufficient kinetic viscosity does not result in insufficient oil film strength. Thus, lubrication in the sliding sections is ensured. In addition, the fluid point of the refrigerant oil is equal to or less than -30°C, thereby ensuring fluidity of the refrigerant oil even in a low-temperature section of the refrigerant circuit (10).

In the invention, the surface tension of the refrigerant oil is equal to or greater than 0.02 N/m and equal to or less than 0.04 N/m at 20°C. If the surface tension of the refrigerant oil is extremely low, small oil droplets of the refrigerant oil tend to be produced in gaseous refrigerant inside the compressor (30), and a relatively large amount of the refrigerant oil is discharged from the compressor (30) together with refrigerant. Thus, there is a possibility to cause excessive oil discharge from the compressor (30). Conversely, if the surface tension of the refrigerant oil is extremely high, large oil droplets of the refrigerant oil discharged from the compressor (30) tend to be produced in the refrigerant circuit (10). Thus, the refrigerant oil discharged from the compressor (30) is difficult to be pushed to flow by refrigerant, and difficult to return to the compressor (30). Consequently, in such a state, there is the possibility to case the excessive oil discharge from the compressor (30).

As described above, in the present invention, the surface tension of the refrigerant oil is equal to or greater than 0.02 N/m and equal to or less than 0.04 N/m at 20°C. Thus, the size of the oil droplet falls within a suitable range, thereby avoiding the excessive oil discharge.

An eighth aspect of the invention is intended for the refrigeration apparatus of any one of the first to seventh aspects of the invention, in which the refrigerant oil has a chlorine concentration of equal to or less than 50 ppm.

In the eighth aspect of the invention, the chlorine concentration of the refrigerant oil is equal to or less than 50 ppm, thereby reducing acceleration of deterioration of refrigerant due to chlorine. This reduces the generation of impurities, and improves durability of the functional resin components (61, 62, 63, 64, 65).

A ninth aspect of the invention is intended for the refrigeration apparatus of any one of the first to eighth aspects of the invention, in which the refrigerant oil has a sulfur concentration of equal to or less than 50 ppm.

In the ninth aspect of the invention, the sulfur concentration of the refrigerant oil is equal to or less than 50 ppm, thereby reducing deterioration of refrigerant due to sulfur. This reduces the generation of impurities, and improves the durability of the functional resin components (61, 62, 63, 64, 65).

A tenth aspect of the invention is intended for the refrigeration apparatus of any one of the first to ninth aspects of the invention, in which the refrigerant represented by Molecular Formula 1: C₃HₘFₙ (note that "m" and "n" are the integers equal to or greater than 1 and equal to or less than 5, and the relationship represented by the expression m + n = 6 is satisfied) and having the single double bond in the molecular structure is 2, 3, 3, 3-tetrafluoro-1-propene.

In the tenth aspect of the invention, as the refrigerant of the refrigerant circuit (10), the single component refrigerant which is 2, 3, 3, 3-tetrafluoro-1-propene, or the refrigerant mixture containing 2, 3, 3, 3-tetrafluoro-1-propene is used.

An eleventh aspect of the invention is intended for the refrigeration apparatus of any one of the first to tenth aspects of the invention, in which the refrigerant of the refrigerant circuit (10) is refrigerant mixture further containing difluoromethane.

In the eleventh aspect of the invention, as the refrigerant of the refrigerant circuit (10), the refrigerant mixture is used, which contains the refrigerant represented by Molecular Formula 1 and having the single double bond in the molecular structure, and difluoromethane. The refrigerant represented by Molecular Formula 1 and having the single double bond in the molecular structure is so-called "low-pressure refrigerant." Thus, if, e.g., single component refrigerant of the refrigerant represented by Molecular Formula 1 and having the single double bond in the molecular structure is used, an influence of a pressure loss of refrigerant on an operational efficiency of the refrigeration apparatus is relatively large, thereby degrading an actual operational efficiency as compared to a theoretical operational efficiency. In the present invention, difluoromethane which is so-called "high-pressure refrigerant" is added to the refrigerant represented by Molecular Formula 1 and having the single double bond in the molecular structure.

A twelfth aspect of the invention is intended for the refrigeration apparatus of any one of the first to eleventh aspects of the invention, in which the refrigerant of the refrigerant circuit (10) is refrigerant mixture further containing pentafluoroethane.

In the twelfth aspect of the invention, as the refrigerant of the refrigerant circuit (10), the refrigerant mixture is used, which contains the refrigerant represented by Molecular Formula 1 and having the single double bond in the molecular structure, and pentafluoroethane. The refrigerant represented by Molecular Formula 1 and having the single double bond in the molecular structure is low flammable refrigerant, but there is no possibility that such refrigerant does not catch fire. In the present invention, pentafluoroethane which is non-flammable refrigerant is added to the refrigerant represented by Molecular Formula 1 and having the single double bond in the molecular structure.

A thirteenth aspect of the invention is intended for the refrigeration apparatus of any one of the first to twelfth aspects of the invention, in which the refrigerant represented by the Molecular Formula 1: C₃HₘFₙ where "m" and "n" are integers equal to or greater than 1 and equal to or less than 5, and a relationship represented by an expression m + n = 6 is satisfied, and having a single double bond in a molecular structure is 1, 3, 3, 3-tetrafluoro-1-propene.

A fourteenth aspect of the invention is intended for the refrigeration apparatus of any one of the first to thirteenth aspects of the invention, in which the refrigerant of the refrigerant circuit (10) is refrigerant mixture further containing HFC-227ea.

### ADVANTAGES OF THE INVENTION

In the present invention, as the refrigerant of the refrigerant circuit (10), the refrigerant represented by Molecular Formula 1: C₃HₘFₙ (note that "m" and "n" are the integers equal to or greater than 1 and equal to or less than 5, and the relationship represented by the expression m + n = 6 is satisfied) and having the single double bond in the molecular structure, or the refrigerant mixture containing the refrigerant is used. Thus, the refrigeration apparatus having a higher theoretical coefficient of performance (COP) of the refrigeration cycle can be provided.

The refrigerant has a relatively-unstable molecular structure due to, e.g., the structure having the double bond, and refrigerant is likely to be deteriorated to generate impurities etc. Thus, there is a possibility that the functional resin components (61, 62, 63, 64,65) of the refrigeration apparatus are chemically/physically denatured and deteriorated due to an influence of such impurities. However, the functional resin components (61, 62, 63, 64,65) of the present invention are made of material having the relatively-high stability to the impurities of refrigerant, i.e., any of polytetrafluoroethylene, polyphenylene sulfide, phenolic resin, polyamide resin, chloroprene rubber, silicone rubber, hydrogenated nitrile rubber, fluorine-containing rubber, and hydrin rubber. Thus, the chemical/physical denaturalization of the functional resin components (61, 62, 63, 64,65) due to the influence of the impurities is avoided. Consequently, in the functional resin components, a desired durability can be ensured.

In the fifth aspect of the invention, the sliding members (61, 62, 63, 64) which are the functional resin components are made of any of polytetrafluoroethylene, polyphenylene sulfide, and polyamide resin. Thus, the deterioration of the sliding members (61, 62, 63, 64) due to impurities generated from refrigerant can be avoided. Consequently, the durability of the sliding members (61, 62, 63, 64) can be improved, thereby obtaining desired sliding properties/abrasion resistance in the sliding members (61, 62, 63, 64).

In the sixth aspect of the invention, the sealing member (65) which is the functional resin component is made of any of polytetrafluoroethylene, polyphenylene sulfide, chloroprene rubber, silicone rubber, hydrogenated nitrile rubber, fluorine-containing rubber, and hydrin rubber. Thus, the deterioration of the sealing member (65) due to impurities generated from refrigerant can be avoided. Consequently, the durability of the sealing member (65) is improved, thereby obtaining desired sealing properties in the sealing member (65).

In the invention, a refrigerant oil is used, which has the saturated water amount of equal to or greater than 2000 ppm at the temperature of 30°C and the relative humidity of 90%. Thus, moisture in refrigerant can be trapped by the refrigerant oil. This reduces or prevents the deterioration of refrigerant due to an influence of moisture.

The refrigerant oil used in the invention mainly contains at least one of polyalkylene glycol, polyol ester, and polyvinyl ether. This allows refrigerant and the refrigerant oil to easily dissolve each other. Thus, even if the refrigerant oil flows into the refrigerant circuit (10), the refrigerant oil is dissolved with refrigerant, and is easily sent back to the compressor (30). As a result, the excessive oil discharge from the compressor (30) can be reduced, thereby avoiding a shortage of the refrigerant oil and inadequate lubrication in the compressor (30). Consequently, reliability of the compressor (30) can be improved.

In particular, the refrigerant oil of the seventh aspect of the invention has the kinetic viscosity of equal to or greater than 30 cSt and equal to or less than 400 cSt at 40°C, thereby ensuring adequate lubrication in the sliding sections. In addition, in the present invention, the fluid point is equal to or less than -30°C, thereby ensuring the fluidity of the refrigerant oil even in a relatively-low-temperature section.

The refrigerant oil used in the invention has a surface tension of equal to or greater than 0.02 N/m and equal to or less than 0.04 N/m at 20°C. Thus, a large amount of the refrigerant oil is not discharged from the compressor (30), or the refrigerant oil discharged from the compressor (30) is not hard to return to the compressor (30). Consequently, the excessive oil discharge from the compressor (30) can be reduced, thereby reducing or preventing inadequate lubrication in the sliding sections of the compression mechanism (82).

The refrigerant oil of the eighth aspect of the invention has the chlorine concentration of equal to or less than 50 ppm, thereby reducing or preventing the acceleration of the deterioration of refrigerant due to chlorine. Consequently, the durability of the functional resin components (61, 62, 63, 64, 65) can be further improved. In addition, the refrigerant oil of the ninth aspect of the invention has the sulfur concentration of equal to or less than 50 ppm, thereby reducing or preventing the acceleration of the deterioration of refrigerant due to sulfur. Consequently, the durability of the functional resin components (61, 62, 63, 64, 65) can be further improved.

In the tenth aspect of the invention, the refrigerant represented by Molecular Formula 1 and having the single double bond in the molecular structure is 2, 3, 3, 3-tetrafluoro-1-propene, thereby improving the COP of the refrigeration cycle.

In the eleventh aspect of the invention, difluoromethane which is so-called "high-pressure refrigerant" is added to the refrigerant represented by Molecular Formula 1 and having the single double bond in the molecular structure. Thus, the influence of the pressure loss of refrigerant on the operational efficiency of the refrigeration apparatus can be reduced, thereby improving the actual operational efficiency of the refrigeration apparatus.

In the twelfth aspect of the invention, pentafluoroethane which is non-flammable refrigerant is added to the refrigerant represented by Molecular Formula 1 and having the single double bond in the molecular structure. Thus, the refrigerant of the refrigerant circuit (10) hardly catches fire, thereby improving reliability of the refrigeration apparatus.

### BRIEF DESCRIPTION OF THE DRAWINGS

[FIG. 1] FIG. 1 is a schematic configuration diagram of a refrigeration apparatus of an embodiment.
[FIG. 2] FIG. 2 is a longitudinal sectional view of a compressor of the embodiment.
[FIG. 3] FIG. 3 is a cross sectional view of the compressor of the embodiment.
[FIG. 4] FIG. 4 is a longitudinal sectional view of a compressor of a third variation of the embodiment.

### DESCRIPTION OF REFERENCE CHARACTERS

- 10: Refrigerant Circuit
- 20: Air Conditioning System (Refrigeration Apparatus)
- 30: Compressor
- 61: Upper Bearing (Sliding Member, Functional Resin Component)
- 62: Intermediate Bearing (Sliding Member, Functional Resin Component)
- 63: Lower Bearing (Sliding Member, Functional Resin Component)
- 64: Thrust Bearing (Sliding Member, Functional Resin Component)
- 65: Seal Ring (Sealing Member)

### DESCRIPTION OF EMBODIMENTS

Embodiments of the present invention will be described in detail hereinafter with reference to the drawings.

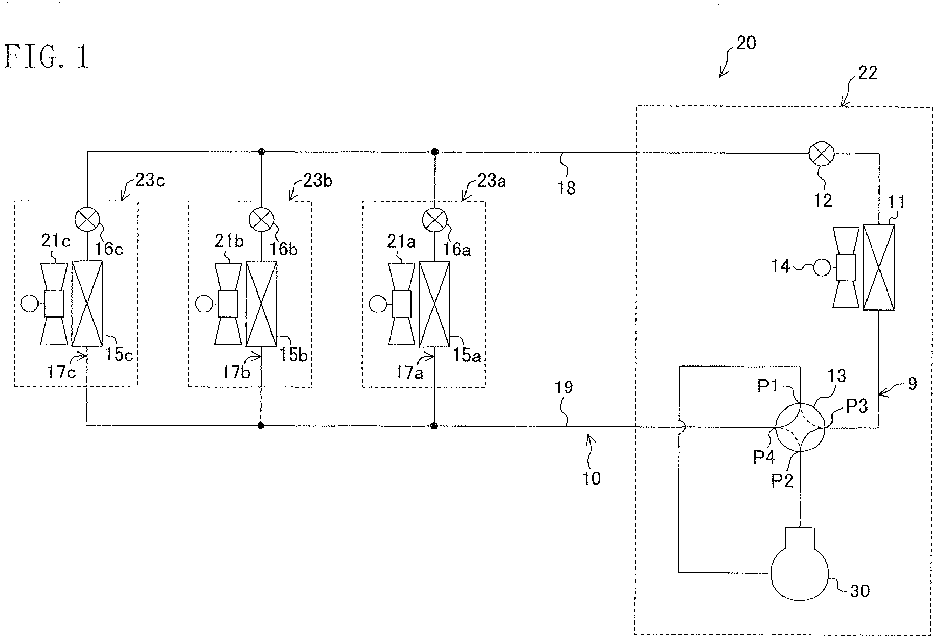

The present embodiment is intended for an air conditioning system (20) including a refrigeration apparatus (20) of the present invention. As illustrated in FIG. 1, the air conditioning system (20) of the present embodiment includes an outdoor unit (22) and three indoor units (23a, 23b, 23c). The number of the indoor units (23) is set forth merely for purposes of examples.

The air conditioning system (20) includes a refrigerant circuit (10) filled with refrigerant to perform a refrigeration cycle. The refrigerant circuit (10) includes an outdoor circuit (9) accommodated in the outdoor unit (22); and an indoor circuit (17a, 17b, 17c) accommodated in each of the indoor units (23). The indoor circuits (17a, 17b, 17c) are connected to the outdoor circuit (9) through a fluid-side communication pipe (18) and a gas-side communication pipe (19). The indoor circuits (17a, 17b, 17c) are connected to each other in parallel.

The refrigerant circuit (10) of the present embodiment is filled with single component refrigerant of 2, 3, 3, 3-tetrafluoro-1-propene (hereinafter referred to as "HFO-1234yf") as refrigerant. Note that a chemical formula of the HFO-1234yf is represented by an expression CF₃ - CF = CH2.

### <Configuration of Outdoor Circuit>

The outdoor circuit (9) includes a compressor (30), an outdoor heat exchanger (11), an outdoor expansion valve (12), and a four-way switching valve (13).

The compressor (30) is, e.g., an inverter compressor with variable operational capacity. Electric power is supplied to the compressor (30) through an inverter. A discharge side of the compressor (30) is connected to a second port (P2) of the four-way switching valve (13), and a suction side of the compressor (30) is connected to a first port (P1) of the four-way switching valve (13). The compressor (30) will be described in detail later.

The outdoor heat exchanger (11) is a cross-fin type fin-and-tube heat exchanger. An outdoor fan (14) is provided near the outdoor heat exchanger (11). In the outdoor heat exchanger (11), heat is exchanged between outdoor air and refrigerant. One end of the outdoor heat exchanger (11) is connected to a third port (P3) of the four-way switching valve (13), and the other end is connected to the outdoor expansion valve (12). A fourth port (P4) of the four-way switching valve (13) is connected to the gas-side communication pipe (19).

The outdoor expansion valve (12) is provided between the outdoor heat exchanger (11) and a fluid-side end of the outdoor circuit (9). The outdoor expansion valve (12) is an electric expansion valve with variable opening.

The four-way switching valve (13) is switchable between a first state in which the first port (P1) communicates with the fourth port (P4), and the second port (P2) communicates with the third port (P3) (state indicated by a solid line in FIG. 1); and a second state in which the first port (P1) communicates with the third port (P3), and the second port (P2) communicates with the fourth port (P4) (state indicated by a dashed line in FIG. 1).

### <Configuration of Indoor Circuit>

In each of the indoor circuits (17), an indoor heat exchanger (15a, 15b, 15c) and an indoor expansion valve (16a, 16b, 16c) are provided in the order from a gas-side end thereof toward a fluid-side end.

The indoor heat exchanger (15) is a cross-fin type fin-and-tube heat exchanger. An indoor fan (21) is provided near the indoor heat exchanger (15). In the indoor heat exchanger (15), heat is exchanged between room air and refrigerant. In addition, the indoor expansion valve (16) is an electric expansion valve with variable opening.

### <Configuration of Compressor>

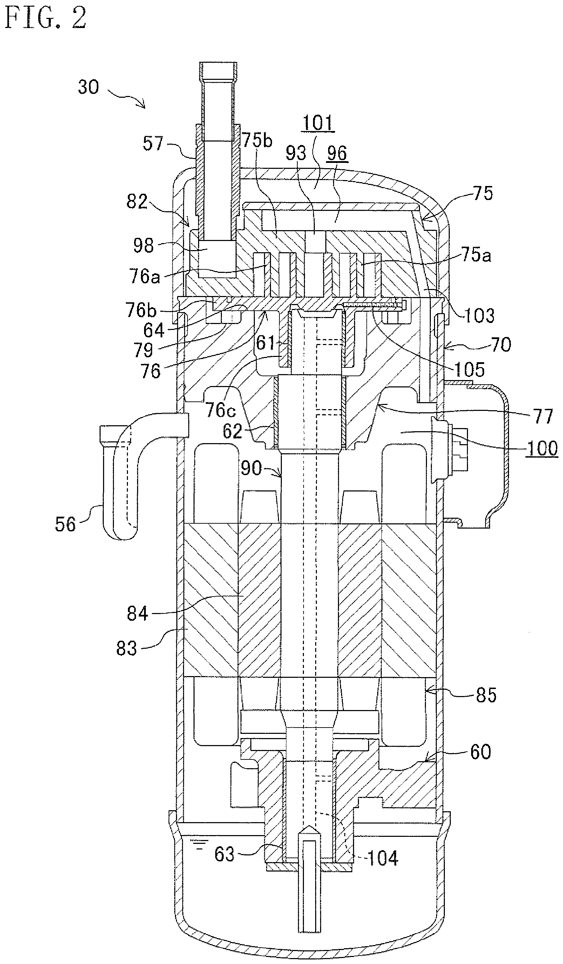

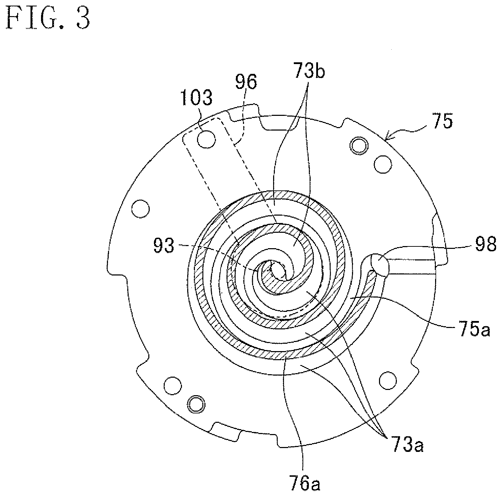

The compressor (30) is, e.g., a hermetic high-pressure dome scroll-type compressor. A configuration of the compressor (30) will be described with reference to FIGS. 2 and 3.

The compressor (30) includes a casing (70) which is an upright hermetic container. An electric motor (85) and a compression mechanism (82) are arranged inside the casing (70) in the order from the bottom to the top.

The electric motor (85) includes a stator (83) and a rotor (84). The stator (83) is fixed to a body section of the casing (70). On the other hand, the rotor (84) is arranged on an inner side with respect to the stator (83), and is connected to a crank shaft (90). The crank shaft (90) is supported by a lower bearing member (60) arranged near an oil sump of the casing (70).

The compression mechanism (82) includes a movable scroll (76) and a fixed scroll (75), and serves as a scroll-type compression mechanism. The movable scroll (76) includes an approximately discoid movable-side end plate (76b) and a spiral movable-side wrap (76a). The movable-side wrap (76a) is vertically arranged on a front surface (upper surface) of the movable-side end plate (76b). A cylindrical protrusion (76c) to which an eccentric section of the crank shaft (90) is inserted is vertically arranged on a back surface (lower surface) of the movable-side end plate (76b). The movable scroll (76) is supported by a housing (77) arranged below the movable scroll (76), through an Oldham's ring (79). On the other hand, the fixed scroll (75) includes an approximately discoid fixed-side end plate (75b) and a spiral fixed-side wrap (75a). The fixed-side wrap (75a) is vertically arranged on a front surface (lower surface) of the fixed-side end plate (75b). In the compression mechanism (82), the fixed-side wrap (75a) is engaged with the movable-side wrap (76a), thereby forming a plurality of compression chambers (73) between contact sections of both wraps (75a, 76a).

In the compressor (30) of the present embodiment, a so-called "asymmetrical spiral structure" is employed, and the fixed-side wrap (75a) and the movable-side wrap (76a) have the different number of turns (the different length of the spiral wrap) from each other. The plurality of compression chambers (73) includes a first compression chamber (73a) defined between an inner circumferential surface of the fixed-side wrap (75a) and an outer circumferential surface of the movable-side wrap (76a); and a second compression chamber (73b) defined between an outer circumferential surface of the fixed-side wrap (75a) and an inner circumferential surface of the movable-side wrap (76a).

In the compression mechanism (82), a suction port (98) is formed in an outer edge section of the fixed scroll (75). A suction pipe (57) penetrating a top section of the casing (70) is connected to the suction port (98). The suction port (98) intermittently communicates with each of the first compression chamber (73a) and the second compression chamber (73b) in response to orbital motion of the movable scroll (76). In addition, a suction check valve (not shown in the figure) for stopping refrigerant from flowing back from the compression chamber (73) to the suction pipe (57) is provided in the suction port (98).

In the compression mechanism (82), a discharge port (93) is formed in a center section of the fixed-side end plate (75b). The discharge port (93) intermittently communicates with each of the first compression chamber (73a) and the second compression chamber (73b) in response to the orbital motion of the movable scroll (76). The discharge port (93) opens to a muffler space (96) formed above the fixed scroll (75).

The casing (70) is divided into an upper suction space (101) and a lower discharge space (100) by the discoid housing (77). The suction space (101) communicates with the suction port (98) through a communication port which is not shown in the figure. The discharge space (100) communicates with the muffler space (96) through a communication path (103) formed through the fixed scroll (75) and the housing (77). Refrigerant discharged through the discharge port (93) flows into the discharge space (100) through the muffler space (96) during an operation, and therefore the discharge space (100) becomes a high-pressure space filled with refrigerant compressed in the compression mechanism (82). A discharge pipe (56) penetrating the body section of the casing (70) opens to the discharge space (100).

In the casing (70) of the compressor (30) of the present embodiment, insulating coating material of windings of the stator (83), insulating films, and sealing material of the compression mechanism (82) are used as components made of organic material. For such components, material is used, which is not physically or chemically denatured by refrigerant even if the components contact high-temperature high-pressure refrigerant, and which particularly has solvent resistance, extraction resistance, thermal/chemical stability, and foaming resistance.

Specifically, for the insulating coating material of the windings of the stator (83), any of the following is used: polyvinyl formal; polyester; THEIC modified polyester; polyamide; polyamide imide; polyester imide; and polyester amide imide. The double coated wires in which an upper layer is made of polyamide imide, and a lower layer is made of polyester imide are preferable. Enamel coating having a glass-transition temperature of equal to or greater than 120°C may be used other than the above-described materials.

In addition, for the insulating film, any of the following is used: polyethylene terephthalate (PET); polyethylene naphthalate (PEN); polyphenylene sulfide (PPS); and polybutylene terephthalate (PBT). A foaming film made of the same foaming material as that of refrigerant of the refrigeration cycle may be used. For insulating material for holding windings such as insulators, polyether ether ketone (PEEK) or liquid crystal polymer (LCP) is used. Epoxy resin is used for varnish.

The oil sump in which refrigerant oil is stored is formed in a bottom section of the casing (70). A first oil supply path (104) opening to the oil sump is formed inside the crank shaft (90). A second oil supply path (105) connected to the first oil supply path (104) is formed in the movable-side end plate (76b). In the compressor (30), refrigerant oil in the oil sump is supplied to the low-pressure-side compression chamber (73) through the first oil supply path (104) and the second oil supply path (105).

Structural resin components arranged so as to contact refrigerant and refrigerant oil are provided in the compressor (30). In the compressor (30) of the present embodiment, an upper bearing (61), an intermediate bearing (62), a lower bearing (63), and a thrust bearing (64) are provided as the structural resin components.

The upper bearing (61) is formed in a sliding section between the eccentric section at an upper end of the crank shaft (90) and the protrusion (76c) of the movable scroll (76). The intermediate bearing (62) is formed in a sliding section between a large-diameter section of the crank shaft (90) and an inner circumferential surface of a through-hole of the housing (77). The lower bearing (63) is formed in a sliding section between a lower end section of the crank shaft (90) and an inner circumferential surface of a through-hole of the lower bearing member (60). The upper bearing (61), the intermediate bearing (62), and the lower bearing (63) serve as so-called "journal bearings." The thrust bearing (64) is formed in a sliding section between the back surface of the movable-side end plate (76b) of the movable scroll (76) and a support section of the housing (77).

Each of the bearings (61, 62, 63, 64) which are the functional resin components serves as a sliding member. The bearing (61, 62, 63, 64) serving as the sliding member is made of any of polytetrafluoroethylene (PTFE), polyphenylene sulfide, and polyamide resin.

### <Refrigerant Oil>

In the present embodiment, refrigerant oil mainly containing at least one of three base oils which are polyalkylene glycol, polyol ester, and polyvinyl ether is used for the compressor (30). For example, for refrigerant oil of the present embodiment, refrigerant oil mainly containing only polyvinyl ether of the three base oils is used.

For the refrigerant oil of the present embodiment, refrigerant oil mainly containing polyvinyl ether having a building block represented by General Expression (I) is used. Among polyvinyl ethers, polyvinyl ether with such a structure has excellent compatibility with the refrigerant represented by Molecular Formula 1 and having the single double bond in the molecular structure.

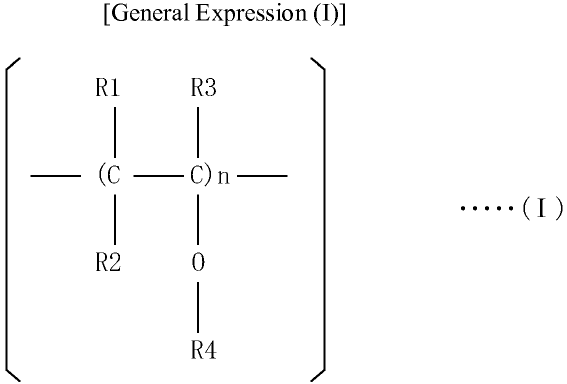

In General Expression (I), symbols "R1," "R2," and "R3" represent a hydrocarbon group in which the hydrogen or carbon number is equal to or greater than 1 and equal to or less than 8. The symbols "R1," "R2," and "R3" may be the same or may be different from each other. In addition, in General Expression (I), the symbol "R4" has a composition ratio at which an alkyl group with the carbon number of 1 or 2 is equal to or greater than 40% and equal to or less than 100%, and an alkyl group with the carbon number of 3 or 4 is equal to or greater than 0% and equal to or less than 60%, in each of building blocks.

The refrigerant oil has kinetic viscosity of equal to or greater than 30 cSt and equal to or less than 400 cSt at 40°C; a fluid point of equal to or less than -30°C; surface tension of equal to or greater than 0.02 N/m and equal to or less than 0.04 N/m at 20°C; and density of equal to or greater than 0.8 g/cm³ and equal to or less than 1.8 g/cm³ at 15°C. In addition, the refrigerant oil has a saturated water amount of equal to or greater than 2000 ppm at a temperature of 30°C and a relative humidity of 90%, and its aniline point falls within a predetermined value range. The "aniline point" means a value representing solubility of, e.g., hydrocarbon solvent, and represents a temperature when a sample (refrigerant oil in the present embodiment) is cooled by mixing it with the equal volume of aniline, and the sample and the aniline no longer dissolve each other to turn them cloudy (specified by JIS K 2256). Note that such a value is a value of the refrigerant oil itself in a state in which refrigerant is not dissolved. In this respect, the same is true for refrigerant oil described in other embodiments which will be described later.

In the present embodiment, polyvinyl ether which is the main component of the refrigerant oil has compatibility with the HFO-1234yf. The kinetic viscosity of the refrigerant oil is equal to or less than 400 cSt at 40°C. Thus, the HFO-1234yf is dissolved with the refrigerant oil to some extent. The fluid point of the refrigerant oil is equal to or less than -30°C, thereby ensuring fluidity of the refrigerant oil even in a low-temperature section of the refrigerant circuit (10). The surface tension is equal to or less than 0.04 N/m at 20°C, and thus, the refrigerant oil discharged from the compressor (30) is less likely to produce large oil droplets, which are difficult to be pushed to flow by refrigerant. Thus, the refrigerant oil discharged from the compressor (30) is dissolved with the HFO-1234yf, and then is returned to the compressor (30) together with the HFO-1234yf.

The kinetic viscosity of the refrigerant oil is equal to or greater than 30 cSt at 40°C, and therefore the extremely-low kinetic viscosity does not result in insufficient oil film strength. Consequently, lubricity can be ensured. In addition, the surface tension is equal to or greater than 0.02 N/m at 20°C, and therefore small oil droplets are less likely to be produced in gaseous refrigerant inside the compressor (30). Thus, a large amount of the refrigerant oil is not discharged from the compressor (30). This ensures a sufficient storage amount of the refrigerant oil in the compressor (30).

The saturated water amount of the refrigerant oil is equal to or greater than 2000 ppm at the temperature of 30°C and the relative humidity of 90%, resulting in relatively-high hygroscopic properties of the refrigerant oil. This allows the refrigerant oil to trap a certain amount of moisture in the HFO-1234yf. The HFO-1234yf has a molecular structure which tends to be altered/deteriorated due to an influence of contained moisture. Thus, a hygroscopic effect of the refrigerant oil can reduce such deterioration.

Further, the value range of the aniline point of the refrigerant oil may be set considering compatibility with the functional resin components. By setting the aniline point in this manner, e.g., compatibility of the bearings (61, 62, 63, 64) serving as the functional resin components, with the refrigerant oil is improved. Specifically, if the aniline point is extremely low, the refrigerant oil tends to penetrate the bearings (61, 62, 63, 64), and therefore the bearings (61, 62, 63, 64) tend to expand. On the other hand, if the aniline point is extremely high, the refrigerant oil is less likely to penetrate the bearings (61, 62, 63, 64), and therefore the bearings (61, 62, 63, 64) tend to contract. The aniline point of the refrigerant oil is set within the predetermined value range, thereby reducing or preventing the expansion/contraction deformation of the bearings (61, 62, 63, 64). In such a state, when causing the expansion/contraction deformation of, e.g., each of the bearings (61, 62, 63, 64), a clearance (gap) in the sliding section cannot be maintained at a desired length. Consequently, there is a possibility to cause an increase in sliding resistance and a reduction in rigidity of the sliding section. However, the aniline point of the refrigerant oil is set within the predetermined value range, thereby reducing the expansion/contraction deformation of the bearings (61, 62, 63, 64). Thus, the above-described disadvantages can be avoided.

An acid trapping agent, an extreme pressure additive, an antioxidizing agent, an antifoam agent, an oiliness agent, and a copper deactivator are added to the refrigerant oil of the present embodiment as additives. All of the six additives are used in the present embodiment. However, besides the antioxidizing agent, each of the remaining five additives may be added as necessary, and only a single type of additive may be added. A compounding amount of each additive is set so that the proportion contained in the refrigerant oil is equal to or greater than 0.01% by mass and equal to or less than 5% by mass. Compounding amounts of the acid trapping agent and of the antioxidizing agent preferably fall within a range of equal to or greater than 0.05% by mass and equal to or less than 3% by mass.

For the acid trapping agent, the following can be used: epoxy compounds such as phenyl glycidyl ether, alkyl glycidyl ether, alkylene glycol glycidyl ether, cyclohexene oxide, α-olefin oxide, and epoxidized soybean oil. Among these agents, the acid trapping agents preferable in terms of the compatibility are phenyl glycidyl ether, alkyl glycidyl ether, alkylene glycol glycidyl ether, cyclohexene oxide, and α-olefin oxide. An alkyl group of alkyl glycidyl ether and an alkylene group of alkylene glycol glycidyl ether may have branches. The carbon number of such groups may be equal to or greater than 3 and equal to or less than 30; preferably equal to or greater than 4 and equal to or less than 24; and more preferably equal to or greater than 6 and equal to or less than 16. In addition, for α-olefin oxide, the total carbon number may be equal to or greater than 4 and equal to or less than 50; preferably equal to or greater than 4 and equal to or less than 24; and more preferably equal to or greater than 6 and equal to or less than 16. A single type of acid trapping agent may be used, or multiple types of acid trapping agents may be combined.

An extreme pressure additive containing phosphoric esters may be used. As phosphoric esters, the following may be used: phosphoric ester; phosphite ester; acidic phosphoric ester; acidic phosphite ester; etc. In addition, an extreme pressure additive may be used, which contains phosphoric esters such as phosphoric ester, phosphite ester, acidic phosphoric ester, and acidic phosphite ester which contain amine salt.

Phosphoric ester includes, e.g., triaryl phosphate; trialkyl phosphate; trialkyl aryl phosphate; triaryl alkyl phosphate; and trialkenyl phosphate. Further, phosphoric ester specifically includes, e.g., triphenyl phosphate; tricresyl phosphate; benzyl diphenyl phosphate; ethyl diphenyl phosphate; tributyl phosphate; ethyl dibutyl phosphate; cresyl diphenyl phosphate; dicresyl phenyl phosphate; ethyl phenyl diphenyl phosphate; diethyl phenyl phenyl phosphate; propyl phenyl diphenyl phosphate; dipropyl phenyl phenyl phosphate; triethyl phenyl phosphate; tripropyl phenyl phosphate; butyl phenyl diphenyl phosphate; dibutyl phenyl phenyl phosphate; tributyl phenyl phosphate; trihexyl phosphate; tri(2-ethylhexyl) phosphate; tridecyl phosphate; trilauryl phosphate; trimyristyl phosphate; tripalmityl phosphate; tristearyl phosphate; and trioleyl phosphate.

Phosphite ester specifically includes, e.g., triethyl phosphite; tributyl phosphite; triphenyl phosphite; tricresyl phosphite; tri(nonylphenyl) phosphite; tri(2-ethylhexyl) phosphite; tridecyl phosphite; trilauryl phosphite; triisooctyl phosphite; diphenyl isodecyl phosphite; tristearyl phosphite; and trioleyl phosphite.

Acidic phosphoric ester specifically includes, e.g., 2-ethylhexyl acid phosphate; ethyl acid phosphate; butyl acid phosphate; oleyl acid phosphate; tetracosyl acid phosphate; isodecyl acid phosphate; lauryl acid phosphate; tridecyl acid phosphate; stearyl acid phosphate; and isostearyl acid phosphate.

Acidic phosphite ester specifically includes, e.g., dibutyl hydrogen phosphite; dilauryl hydrogen phosphite; dioleyl hydrogen phosphite; distearyl hydrogen phosphite; and diphenyl hydrogen phosphite. Among the above-described phosphoric esters, oleyl acid phosphate or stearyl acid phosphate is preferable.

Mono-substituted amine of amine used for amine salt of phosphoric ester, phosphite ester, acidic phosphoric ester, or acidic phosphite ester specifically includes, e.g., butylamine; pentylamine; hexylamine; cyclohexylamine; octylamine; laurylamine; stearylamine; oleylamine; and benzylamine. Di-substituted amine specifically includes, e.g., dibutylamine; dipentylamine; dihexylamine; dicyclohexylamine; dioctylamine; dilaurylamine; distearylamine; dioleylamine; dibenzylamine; stearyl monoethanolamine; decyl monoethanolamine; hexyl monopropanolamine; benzyl monoethanolamine; phenyl monoethanolamine; and tolyl monopropanolamine. Tri-substituted amine specifically includes, e.g., tributylamine; tripentylamine; trihexylamine; tricyclohexylamine; trioctylamine; trilaurylamine; tristearylamine; trioleylamine; tribenzylamine; dioleyl monoethanolamine; dilauryl monopropanolamine; dioctyl monoethanolamine; dihexyl monopropanolamine; dibutyl monopropanolamine; oleyl diethanolamine; stearyl dipropanolamine; lauryl diethanolamine; octyl dipropanolamine; butyl diethanolamine; benzyl diethanolamine; phenyl diethanolamine; tolyl dipropanolamine; xylyl diethanolamine; triethanolamine; and tripropanolamine.

In addition, extreme pressure additives other than the above may be added. For example, the following may be used: an organic sulfur compound extreme pressure additive such as monosulfides, polysulfides, sulfoxides, sulfones, thiosulfinates, oil sulfides, thiocarbonates, thiophenes, thiazoles, and methanesulfonate esters; a thiophosphate extreme pressure additive such as thiophosphate triesters; an ester extreme pressure additive such as higher fatty acids, hydroxyaryl fatty acids, polyhydric alcohol esters, and acrylic acid esters; an organic chloride extreme pressure additive such as chlorinated hydrocarbons and chlorinated carboxylic acid derivatives; an organic fluorine extreme pressure additive such as fluorinated aliphatic carboxylic acids, fluorinated ethylene resin, fluorinated alkyl polysiloxanes, and fluorinated graphites; an alcohol extreme pressure additive such as higher alcohol; and a metal compound extreme pressure additive such as naphthenates (lead naphthenate etc.), fatty acid salts (lead fatty acid etc.), thiophosphates (zinc dialkyl phosphorodithioate etc.), thiocarbamic acid salts, an organic molybdenum compound, an organotin compound, an organogermanium compound, and borate esters.

For the antioxidizing agent, a phenol antioxidizing agent or an amine antioxidizing agent isused. The phenol antioxidizing agent includes, e.g., 2, 6-di-tert-butyl-4-methylphenol (DBPC); 2, 6-di-tert-butyl-4-ethylphenol; 2, 2'-methylenebis(4-methyl-6-tert-butylphenol); 2, 4-dimethyl-6-tert-butylphenol; and 2, 6-di-tert-butylphenol. In addition, the amine antioxidizing agent includes, e.g., N, N'-diisopropyl-p-phenylenediamine; N, N'-di-sec-butyl-p-phenylenediamine; phenyl-α-naphthylamine; and N, N'-di-phenyl-p-phenylenediamine. For the antioxidizing agent, an oxygen trapping agent for trapping oxygen may be used.

For the copper deactivator, benzotriazole, a derivative thereof, etc. may be used. For the antifoam agent, a silicon compound may be used. For the oiliness agent, higher alcohols may be used.

As necessary, a load withstanding additive, a chlorine trapping agent, a detergent dispersant, a viscosity index improver, an antirust agent, a stabilizer, a corrosion inhibitor, a fluid-point lowering agent, etc. may be added to the refrigerant oil of the present embodiment. A compounding amount of each additive may be set so that the proportion contained in the refrigerant oil is equal to or greater than 0.01% by mass and equal to or less than 5% by mass, preferably equal to or greater than 0.05% by mass and equal to or less than 3% by mass. The refrigerant oil of the present embodiment has a chlorine concentration of equal to or less than 50 ppm, and a sulfur concentration of equal to or less than 50 ppm.

### Operation

An operation of the air conditioning system (20) will be described. The air conditioning system (20) can perform a cooling operation and a heating operation, and switches between the cooling operation and the heating operation by the four-way switching valve (13).

### <<Cooling Operation>>

In the cooling operation, the four-way switching valve (13) is set to the first state. In such a state, when operating the compressor (30), high-pressure refrigerant discharged from the compressor (30) is condensed by releasing heat to outdoor air in the outdoor heat exchanger (11). The refrigerant condensed in the outdoor heat exchanger (11) is distributed to each of the indoor circuits (17). The pressure of the refrigerant flowing into the indoor circuit (17) is reduced by the indoor expansion valve (16), and then such refrigerant is evaporated by absorbing heat from room air in the indoor heat exchanger (15). Meanwhile, room air is cooled and supplied to a room.

The refrigerant evaporated in the indoor circuit (17) joins the refrigerant evaporated in the other indoor circuits (17), and then is returned to the outdoor circuit (9). In the outdoor circuit (9), the refrigerant returned from the indoor circuits (17) is recompressed in the compressor (30), and then such refrigerant is discharged. During the cooling operation, a superheat degree control is performed, in which the opening of the indoor expansion valve (16) is controlled so that the degree of superheat of refrigerant at an outlet port of the indoor heat exchanger (15) is a constant value (e.g., 5°C).

### <<Heating Operation>>

In the heating operation, the four-way switching valve (13) is set to the second state. In such a state, when operating the compressor (30), high-pressure refrigerant discharged from the compressor (30) is distributed to each of the indoor circuits (17). The refrigerant flowing into the indoor circuit (17) is condensed by releasing heat to room air in the indoor heat exchanger (15). Meanwhile, room air is heated and supplied to a room. The refrigerant condensed in the indoor heat exchanger (15) joins the refrigerant condensed in the other indoor heat exchangers (15) in the outdoor circuit (9).

The pressure of the refrigerant joined each other in the outdoor circuit (9) is reduced by the outdoor expansion valve (12), and then such refrigerant is evaporated by absorbing heat from outdoor air in the outdoor heat exchanger (11). The refrigerant evaporated in the outdoor heat exchanger (11) is recompressed in the compressor (30), and then such refrigerant is discharged. During the heating operation, a subcooling control is performed, in which the opening of the indoor expansion valve (16) is controlled so that the degree of supercool of refrigerant at the outlet port of the indoor heat exchanger (15) is a constant value (e.g., 5°C).

### Advantages of Embodiment

In the present embodiment, as the refrigerant of the refrigerant circuit (10), the refrigerant represented by Molecular Formula 1: C₃HₘFₙ (note that "m" and "n" are the integers equal to or greater than 1 and equal to or less than 5, and the relationship represented by the expression m + n = 6 is satisfied) and having the single double bond in the molecular structure is used. This provides the air conditioning system (20) with a higher theoretical coefficient of performance (COP) of the refrigeration cycle.

On the other hand, the HFO-1234yf has a relatively-unstable molecular structure due to, e.g., the structure having the double bond, and refrigerant is likely to be deteriorated to generate impurities etc. Thus, there is a possibility that such impurities chemically/physically denature and deteriorate the functional resin components (i.e., bearings (61, 62, 63, 64)) of the air conditioning system (20). However, in the present invention, each of the bearings (61, 62, 63, 64) is made of any of polytetrafluoroethylene, polyphenylene sulfide, and polyamide resin, and such resin materials have relatively-high stability to the impurities generated from refrigerant. Thus, the deterioration of the bearings (61, 62, 63, 64) due to the influence of the impurities can be avoided, thereby obtaining a desired sliding capability in the bearings (61, 62, 63, 64).

In the present embodiment, the refrigerant oil having the saturated water amount of equal to or greater than 2000 ppm at the temperature of 30°C and the relative humidity of 90% is used, thereby trapping moisture in refrigerant by the refrigerant oil. This reduces or prevents deterioration of the HFO-1234yf due to an influence of moisture. In addition, the refrigerant oil has the chlorine concentration of equal to or less than 50 ppm, thereby reducing or preventing acceleration of the deterioration of refrigerant due to an influence of chloride components. Further, the refrigerant oil has the sulfur concentration of equal to or less than 50 ppm, thereby reducing or preventing the acceleration of the deterioration of refrigerant due to an influence of sulfur components. As described above, in the present embodiment, the refrigerant oil is selected so that the deterioration of refrigerant is reduced or prevented as much as possible, thereby reducing the generation of impurities due to the deterioration of refrigerant. Consequently, the denaturalization/deterioration of the bearings (61, 62, 63, 64) can be effectively reduced or prevented.

The refrigerant oil contains at least one of polyalkylene glycol, polyol ester, and polyvinyl ether as the main component. This allows refrigerant and the refrigerant oil to easily dissolve each other. Thus, even if the refrigerant oil flows into the refrigerant circuit (10), such refrigerant oil is dissolved with refrigerant, and is easily sent back to the compressor (30). As a result, excessive oil discharge from the compressor (30) can be reduced, thereby avoiding a shortage of the refrigerant oil and inadequate lubrication in the compressor (30). Consequently, reliability of the compressor (30) can be improved.

The refrigerant oil may be deteriorated due to a long-term refrigeration cycle, resulting in generation of impurities. However, the bearings (61, 62, 63, 64) of the present embodiment are made of polytetrafluoroethylene or polyamide resin, thereby avoiding the chemical/physical denaturalization of the bearings (61, 62, 63, 64) due to the influence of the impurities caused due to the deterioration of the refrigerant oil.

Difluoromethane which is so-called "high-pressure refrigerant" is added to the refrigerant represented by Molecular Formula 1 and having the single double bond in the molecular structure. This reduces an influence of a pressure loss of refrigerant on an operational efficiency of the air conditioning system (20), thereby improving an actual operational efficiency of the air conditioning system (20).

### Refrigerant Oil

In the present invention, refrigerant oil mainly containing only polyol ester of three base oils which are polyalkylene glycol, polyol ester, and polyvinyl ether is used for the compressor (30). Any of the following is used for polyol ester: "ester of aliphatic polyhydric alcohol and linear or branched fatty acid," "partial ester of aliphatic polyhydric alcohol and linear or branched fatty acid," and "complex ester of partial ester of aliphatic polyhydric alcohol and linear or branched fatty acid having the carbon number of equal to or greater than 3 and equal to or less than 9, and aliphatic or aromatic dibasic acid." Among polyol esters, such polyol esters have excellent compatibility with refrigerant represented by Molecular Formula 1 and having the single double bond in the molecular structure.

Aliphatic polyhydric alcohol contained in the "ester of" or "partial ester of aliphatic polyhydric alcohol and linear or branched fatty acid" includes, e.g., ethylene glycol; propylene glycol; butylene glycol; neopentyl glycol; trimethylolethane; ditrimethylolethane; trimethylolpropane; ditrimethylolpropane; glycerin; pentaerythritol; dipentaerythritol; tripentaerythritol; and sorbitol. As aliphatic polyhydric alcohol, pentaerythritol, dipentaerythritol, and tripentaerythritol are preferable.

Fatty acid having the carbon number of equal to or greater than 3 and equal to or less than 12 may be used. For fatty acid, the following may be used: propionic acid; butyric acid; pivalic acid; valeric acid; caproic acid; heptanoic acid; octanoic acid; nonanoic acid; decanoic acid; dodecanoic acid; isovaleric acid; neopentanoic acid; 2-methyl-butyric acid; 2-ethyl-butyric acid; 2-methyl-hexanoic acid; 2-ethyl-hexanoic acid; iso-octanoic acid; iso-nonanoic acid; iso-decanoic acid; 2, 2-dimethyl-octanoic acid; 2-butyloctanoic acid; and 3, 5, 5-trimethylhexane acid. As fatty acid, the carbon number is preferably equal to or greater than 5 and equal to or less than 12, and more preferably equal to or greater than 5 and equal to or less than 9. Specifically, valeric acid, hexanoic acid, heptanoic acid, 2-methyl-hexanoic acid, 2-ethyl-hexanoic acid, iso-octanoic acid, iso-nonanoic acid, iso-decanoic acid, 2, 2-dimethyl-octanoic acid, 2-butyloctanoic acid, 3, 5, 5-trimethylhexane acid, etc. are preferable.

In the "complex ester of partial ester of aliphatic polyhydric alcohol and linear or branched fatty acid having the carbon number of equal to or greater than 3 and equal to or less than 9, and aliphatic or aromatic dibasic acid," fatty acid having the carbon number of equal to or greater than 5 and equal to or less than 7 is preferable, and fatty acid having the carbon number of 5 or 6 is more preferable. Specifically, valeric acid, hexanoic acid, isovaleric acid, 2-methyl-butyric acid, 2-ethyl-butyric acid, or mixture thereof is preferable. Fatty acid may be used, in which fatty acid having the carbon number of 5 is mixed with fatty acid having the carbon number of 6 at a weight ratio equal to or greater than 10:90 and equal to or less than 90:10.

Aliphatic dibasic acid includes succinic acid, adipic acid, pimelic acid, suberic acid, azelaic acid, sebacic acid, undecanoic diacid, dodecanoic diacid, tridecanoic diacid, and docosanoic diacid. Aromatic dibasic acid includes phthalic acid and isophthalic acid. In an esterification reaction for preparing complex ester, polyhydric alcohol reacts with dibasic acid at a predetermined rate for partial esterification, and then such partial ester reacts with fatty acid. A reaction sequence of dibasic acid and fatty acid may be reversed, and dibasic acid may be mixed with fatty acid for esterification.

### Embodiment

In an embodiment, refrigerant oil mainly containing only polyalkylene glycol of three base oils which are polyalkylene glycol, polyol ester, and polyvinyl ether is used for the compressor (30).

In this embodiment, polyalkylene glycol is used, which has a molecular structure represented by Molecular Formula 2: R1(R2)ₘ(R30)ₙR4 (note that "m" and "n" are integers, symbols "R1" and "R4" represent an alkyl or aryl group having the hydrogen or carbon number of equal to or greater than 1 and equal to or less than 6, and symbols "R2" and "R3" represent an alkyl group having the carbon number of equal to or greater than 1 and equal to or less than 4). Among polyalkylene glycols, polyalkylene glycol having such a molecular structure has excellent compatibility with the refrigerant represented by Molecular Formula 1 and having the single double bond in the molecular structure.

### Further Embodiment

As long as the functional resin components are arranged so as to contact refrigerant, the resin material of the present invention may be applicable to an inside and an outside (functional components to be connected to the refrigerant circuit (10)) of the compressor (30). In such a case, the functional resin components are preferably made of any of polytetrafluoroethylene, polyphenylene sulfide, phenolic resin, polyamide resin, chloroprene rubber, silicone rubber, hydrogenated nitrile rubber, fluorine-containing rubber, and hydrin rubber. This will be described in detail below.

### <Sliding Member>

Sliding members made of fluorine resin, e.g., any of polytetrafluoroethylene, polyphenylene sulfide, and polyamide resin, may be formed on surfaces of the sliding sections of, e.g., the movable scroll (76), the fixed scroll (75), and the Oldham's ring (79).

The resin material of the present invention may be applicable to the sliding members applied to the functional components of the refrigerant circuit (10) outside the compressor (30). Specifically, the sliding member made of fluorine resin, e.g., any of polytetrafluoroethylene, polyphenylene sulfide, and polyamide resin, may be applicable to, e.g., a sliding section of a valving element of the four-way switching valve (13). In particular, in the sliding section of the valving element, 66 nylon is preferably used as the above-described polyamide resin.

### <Sealing Member>

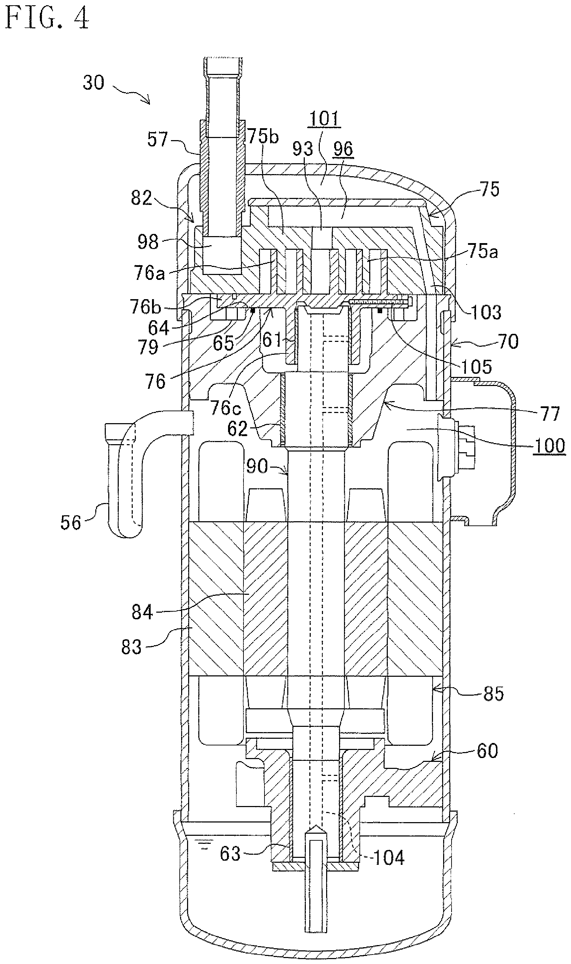

The resin material of the present invention may be applicable to a sealing member for reducing or preventing a leakage of refrigerant. In, e.g., FIG. 4, a seal ring (65) is inserted between the movable-side end plate (76b) of the movable scroll (76) and an upper surface of the housing (77) as a sealing member. The seal ring (65) divides a space above the housing (77) into inner and outer sections. That is, the seal ring (65) reduces or prevents a leakage of high-pressure refrigerant on an inner circumferential side thereof to an outer circumferential side, i.e., the suction side of the compressor (30). The seal ring (65) is preferably made of any of polytetrafluoroethylene, polyphenylene sulfide, chloroprene rubber, silicone rubber, hydrogenated nitrile rubber, fluorine-containing rubber, and hydrin rubber. Such resin materials has relatively-high stability to impurities generated due to deterioration of refrigerant. Consequently, deterioration of the seal ring (65) due to the generation of the impurities is reduced.

Sealing members to which the present invention is applied includes, e.g., an O-ring inserted between an inner circumferential surface of the casing (70) and an outer circumferential surface of the housing (77); and a packing inserted in a pipe joint section of the discharge pipe (56) or the suction pipe (57).

The resin material of the present invention may be applicable to the sealing members applied to the functional components of the refrigerant circuit (10) outside the compressor (30). Specifically, in, e.g., the four-way switching valve (13), the expansion valves (12, 16a, 16b, 16c), and other solenoid valves, the sealing member for reducing or preventing an outflow of refrigerant to outside may be made of any of polytetrafluoroethylene, polyphenylene sulfide, chloroprene rubber, silicone rubber, hydrogenated nitrile rubber, fluorine-containing rubber, and hydrin rubber.

If the resin material of the present invention is applied to the seal ring (65), the aniline point of the refrigerant oil is preferably set within the predetermined value range. This reduces the expansion or contraction of the seal ring (65). Consequently, reduction in or degradation of sealing capability of the seal ring (65) can be reduced or prevented, thereby ensuring the sealing capability of the seal ring (65) over a long period of time.

### <Other Structural Components>

Further, the resin material of the present invention may be applicable to other components (structural components) other than the above. Specifically, e.g., pipes for guiding the refrigerant oil to a predetermined section, and valving elements themselves of the four-way switching valve (13), the expansion valves (12, 16a, 16b, 16c), the other solenoid valves, etc. may be made of any of fluorine resin, phenolic resin, and polyamide resin (preferably nylon 66).

### <<Other Embodiments>>

The foregoing embodiments may have the following configurations.

In the foregoing embodiments, refrigerant oil may be used, which mainly contains two or more of polyalkylene glycol, polyol ester, and polyvinyl ether.

In the foregoing embodiments, as the refrigerant of the refrigerant circuit (10), single component refrigerant of refrigerant represented by Molecular Formula 1 and having the single double bond in the molecular structure, other than the HFO-1234yf may be used. Specifically, the following may be used: 1, 2, 3, 3, 3-pentafluoro-1-propene (referred to as "HFO-1225ye," and a chemical formula thereof is represented by an expression CF₃ - CF = CHF); 1, 3, 3, 3-tetrafluoro-1-propene (referred to as "HFO-1234ze," and a chemical formula thereof is represented by an expression CF₃ - CH = CHF); 1, 2, 3, 3-tetrafluoro-1-propene (referred to as "HFO-1234ye," and a chemical formula thereof is represented by an expression CHF₂ - CF = CHF); 3, 3, 3-trifluoro-1-propene (referred to as "HFO-1243zf," and a chemical formula thereof is represented by an expression CF₃ - CH = CH2); 1,2,2-trifluoro-1-propene (a chemical formula thereof is represented by an expression CH3 - CF = CF₂); and 2-fluoro-1-propene (a chemical formula thereof is represented by an expression CH3 - CF = CH2).

In the foregoing embodiments, refrigerant mixture may be used, which is made by adding at least one of HFC-32 (difluoromethane), HFC-125 (pentafluoroethane), HFC-134 (1, 1, 2, 2-tetrafluoroethane), HFC-134a (1, 1, 1, 2-tetrafluoroethane), HFC-143a (1, 1, 1-trifluoroethane), HFC-152a (1, 1-difluoroethane), HFC-161, HFC-227ea, HFC-236ea, HFC-236fa, HFC-365mfc, methane, ethane, propane, propene, butane, isobutene, pentane, 2-methylbutane, cyclopentane, dimethyl ether, bis-trifluoromethyl-sulfide, carbon dioxide, and helium; to the refrigerant represented by Molecular Formula 1 and having the single double bond in the molecular structure (2, 3, 3, 3-tetrafluoro-1-propene; 1, 3, 3, 3-tetrafluoro-1-propene; 1, 2, 3, 3-tetrafluoro-1-propene; 3, 3, 3-trifluoro-1-propene; 1, 2, 2-trifluoro-1-propene; and 2-fluoro-1-propene).

Refrigerant mixture of, e.g., the HFO-1234yf and the HFC-32 may be used. In such a case, the refrigerant mixture may be used, which contains the HFO-1234yf of 78.2% by mass and the HFC-32 of 21.8% by mass. In the refrigerant mixture of the HFO-1234yf and the HFC-32, the proportion of the HFO-1234yf may be equal to or greater than 70% by mass and equal to or less than 94% by mass, and the proportion of the HFC-32 may be equal to or greater than 6% by mass and equal to or less than 30% by mass. The proportion of the HFO-1234yf is preferably equal to or greater than 77% by mass and equal to or less than 87% by mass, and the proportion of the HFC-32 may be equal to or greater than 13% by mass and equal to or less than 23% by mass. More preferably, the proportion of the HFO-1234yf is equal to or greater than 77% by mass and equal to or less than 79% by mass, and the proportion of the HFC-32 is equal to or greater than 21% by mass and equal to or less than 23% by mass.

Refrigerant mixture of the HFO-1234yf and the HFC-125 may be used. In such a case, the proportion of the HFC-125 is preferably equal to or greater than 10% by mass, and more preferably equal to or greater than 10% by mass and equal to or less than 20% by mass.

Refrigerant mixture of the HFO-1234yf, the HFC-32, and the HFC-125 may be used. In such a case, refrigerant mixture may be used, which contains the HFO-1234yf of 52% by mass, the HFC-32 of 23% by mass, and the HFC-125 of 25% by mass.

In the foregoing embodiments, a dryer filled with silicic acid or synthetic zeolite as desiccant may be provided in the refrigerant circuit (10).

In the foregoing embodiments, the compressor (30) may be a horizontal compressor, or may be other types of compressors such as reciprocating, rotary, and screw compressors.

In the foregoing embodiments, the refrigeration apparatus (20) may be an air conditioning system only for heating; a refrigerator or a freezer for cooling food; a refrigeration system in which an air conditioner is combined with a refrigerator or a freezer; or a hot-water supply system in which water is heated in a radiator of a refrigerant circuit (10).

The foregoing embodiments have been set forth merely for purposes of preferred examples in nature, and are not intended to limit the scope, applications, and use of the invention.

### INDUSTRIAL APPLICABILITY

As described above, the present invention is useful for the refrigeration apparatus in which the refrigeration cycle is performed.

## Claims

1. A refrigeration apparatus, comprising:
a refrigerant circuit (10), a refrigerant circulating in the refrigerant circuit (10) by a compressor (30) to perform a refrigeration cycle,
wherein, as refrigerant of the refrigerant circuit (10), refrigerant represented by Molecular Formula 1: C₃HₘFₙ where "m" and "n" are integers equal to or greater than 1 and equal to or less than 5, and a relationship represented by an expression m + n = 6 is satisfied, and having a single double bond in a molecular structure, or refrigerant mixture containing the refrigerant is used,
predetermined functional resin components (61, 62, 63, 64, 65) arranged so as to contact the refrigerant of the refrigerant circuit (10) are made of any of polytetrafluoroethylene, polyphenylene sulfide, phenolic resin, polyamide resin, chloroprene rubber, silicone rubber, hydrogenated nitrile rubber, fluorine-containing rubber, and hydrin rubber,
in the compressor (30), refrigerant oil is used, which has a saturated water amount of equal to or greater than 2000 ppm at a temperature of 30°C and a relative humidity of 90%,
the refrigerant oil mainly contains at least one of polyalkylene glycol, polyol ester, and polyvinyl ether,
the refrigerant oil has surface tension of equal to or greater than 0.02 N/m and equal to or less than 0.04 N/m at 20°C, and
the refrigerant oil contains a phenol antioxidizing agent or an amine antioxidizing agent.

2. The refrigeration apparatus of claim 1, wherein
the phenol antioxidizing agent contains any of: 2, 6-di-tert-butyl-4-methylphenol (DBPC); 2, 6-di-tert-butyl-4-ethylphenol; 2, 2'-methylenebis(4-methyl-6-tert-butylphenol); 2, 4-dimethyl-6-tert-butylphenol; and 2, 6-di-tert-butylphenol.

3. The refrigeration apparatus of claim 1, wherein
the amine antioxidizing agent contains any of: N, N'-diisopropyl-p-phenylenediamine; N, N'-di-sec-butyl-p-phenylenediamine; phenyl-α-naphthylamine; and N, N'-di-phenyl-p-phenylenediamine.

4. The refrigeration apparatus of any one of claims 1 to 3, wherein
the proportion of the antioxidizing agent is equal to or greater than 0.01% by mass and equal to or less than 5% by mass.

5. The refrigeration apparatus of claims 1 to 4 wherein
the functional resin components are sliding members (61, 62, 63, 64) provided in predetermined sliding sections; and
the sliding members (61, 62, 63, 64) are made of any of polytetrafluoroethylene, polyphenylene sulfide, and polyamide resin.

6. The refrigeration apparatus of any one of claims 1 to 5, wherein
the functional resin component is a sealing member (65) for reducing or preventing a leakage of refrigerant in a predetermined clearance; and
the sealing member (65) is made of any of polytetrafluoroethylene, polyphenylene sulfide, chloroprene rubber, silicone rubber, hydrogenated nitrile rubber, fluorine-containing rubber, and hydrin rubber.

7. The refrigeration apparatus of any one of claims 1 to 5, wherein
the refrigerant oil has kinetic viscosity of equal to or greater than 30 cSt and equal to or less than 400 cSt at 40°C, and a fluid point of equal to or less than -30°C.

8. The refrigeration apparatus of any one of claims 1 to 7, wherein
the refrigerant oil has a chlorine concentration of equal to or less than 50 ppm.

9. The refrigeration apparatus of any one of claims 1 to 8, wherein
the refrigerant oil has a sulfur concentration of equal to or less than 50 ppm.

10. The refrigeration apparatus of any one of claims 1 to 9, wherein
the refrigerant represented by Molecular Formula 1: C₃HₘFₙ where "m" and "n" are the integers equal to or greater than 1 and equal to or less than 5, and the relationship represented by the expression m + n = 6 is satisfied, and having the single double bond in the molecular structure is 2, 3, 3, 3-tetrafluoro-1-propene.

11. The refrigeration apparatus of any one of claims 1 to 10, wherein
the refrigerant of the refrigerant circuit (10) is refrigerant mixture further containing difluoromethane.

12. The refrigeration apparatus of any one of claims 1 to 11, wherein
the refrigerant of the refrigerant circuit (10) is refrigerant mixture further containing pentafluoro ethane.

13. The refrigeration apparatus of any one of claims 1 to 12, wherein
the refrigerant represented by the Molecular Formula 1: C₃HₘFₙ where "m" and "n" are integers equal to or greater than 1 and equal to or less than 5, and a relationship represented by an expression m + n = 6 is satisfied, and having a single double bond in a molecular structure is 1, 3, 3, 3-tetrafluoro-1-propene.

14. The refrigeration apparatus of any one of claims 10 to 13, wherein
the refrigerant of the refrigerant circuit (10) is refrigerant mixture further containing HFC-227ea.

## Patentansprüche

1. Kühlvorrichtung, umfassend:
einen Kühlmittelkreislauf (10), wobei ein Kühlmittel in dem Kühlmittelkreislauf (10) durch einen Kompressor (30) zirkuliert wird, um einen Kühlzyklus durchzuführen,
wobei als Kühlmittel des Kühlmittelkreislaufs (10) ein Kühlmittel, das durch Summenformel 1 wiedergegeben wird: C₃HₘFₙ, worin "m" und "n" ganze Zahlen gleich oder größer als 1 und gleich oder kleiner als 5 sind, und eine Beziehung, die durch den Ausdruck m + n = 6 wiedergegeben ist, erfüllt ist, und eine einzelne Doppelbindung in einer Molekülstruktur aufweist, oder eine Kühlmittelmischung, die das Kühlmittel enthält, verwendet wird,
vorbestimmte funktionale Harzkomponenten (61, 62, 63, 64, 65), die so angeordnet sind, dass sie mit dem Kühlmittel des Kühlmittelkreislaufs (10) in Kontakt stehen, aus mindestens einem Vertreter von Polytetrafluorethylen, Polyphenylsulfid, Phenolharz, Polyamidharz, Chloroprenkautschuk, Silikonkautschuk, hydriertem Nitrilkautschuk, Fluor-enthaltendem Kautschuk und Hydrinkautschuk hergestellt sind,
in dem Kompressor (30) ein Kühlmittelöl verwendet wird, das eine gesättigte Wassermenge von gleich oder größer als 2000 ppm bei einer Temperatur von 30 °C und einer relativen Luftfeuchtigkeit von 90% aufweist,
das Kühlmittelöl hauptsächlich mindestens eines aus Polyalkylenglykol, Polyolester und Polyvinylether enthält,
das Kühlmittelöl eine Oberflächenspannung von gleich oder größer als 0,02 N/m und gleich oder kleiner als 0,04 N/m bei 20 °C aufweist, und
das Kühlmittel ein Phenol-Antioxidationsmittel oder ein Amin-Antioxidationsmittel enthält.

2. Kühlvorrichtung nach Anspruch 1, wobei
das Phenol-Antioxidationsmittel mindestens eines von 2,6-Di-tert-butyl-4-methylphenol (DBPC); 2,6-Di-tert-butyl-4-ethylphenol; 2,2'-Methylenbis(4-methyl-6-tert-butylphenol); 2,4-Dimethyl-6-tert-butylphenol; und 2,6-Di-tert-butylphenol enthält.

3. Kühlvorrichtung nach Anspruch 1, wobei
das Amin-Antioxidationsmittel mindestens eines von N,N'-Diisopropyl-p-phenylendiamin; N,N'-Di-sec-butyl-p-phenylendiamin; Phenyl-α-naphthylamin; und N,N'-Di-phenyl-p-phenylendiamin enthält.

4. Kühlvorrichtung nach mindestens einem der Ansprüche 1 bis 3, wobei
der Anteil des Antioxidationsmittels gleich oder größer als 0,01 Massen-% und gleich oder kleiner als 5 Massen-% ist.

5. Kühlvorrichtung nach mindestens einem der Ansprüche 1 bis 4, wobei
die funktionalen Harzkomponenten Gleitelemente (61, 62, 63, 64) sind, die in vorbestimmten Gleitabschnitten bereitgestellt sind; und
die Gleitelemente (61, 62, 63, 64) aus mindestens einem aus Polytetrafluorethylen, Polyphenylsulfid und Polyamidharz hergestellt sind.

6. Kühlvorrichtung nach mindestens einem der Ansprüche 1 bis 5, wobei
die funktionale Harzkomponente ein Dichtungselement (65) zum Reduzieren oder Verhindern eines Kühlmittellecks in einem vorbestimmten Zwischenraum ist; und
das Dichtungselement (65) aus mindestens einem aus Polytetrafluorethylen, Polyphenylsulfid, Chloroprenkautschuk, Silikonkautschuk, hydriertem Nitrilkautschuk, Fluor-enthaltendem Kautschuk und Hydrinkautschuk hergestellt ist.

7. Kühlvorrichtung nach mindestens einem der Ansprüche 1 bis 5, wobei
das Kühlmittelöl eine kinematische Viskosität von gleich oder größer als 30 cSt und gleich oder kleiner als 400 cSt bei 40 °C und einen Flüssigkeitspunkt (fluid point) von gleich oder kleiner als -30 °C aufweist.

8. Kühlvorrichtung nach mindestens einem der Ansprüche 1 bis 7, wobei
das Kühlmittelöl eine Chlorkonzentration von gleich oder kleiner als 50 ppm aufweist.

9. Kühlvorrichtung nach mindestens einem der Ansprüche 1 bis 8, wobei
das Kühlmittelöl eine Schwefelkonzentration von gleich oder kleiner als 50 ppm aufweist.

10. Kühlvorrichtung nach mindestens einem der Ansprüche 1 bis 9, wobei
das Kühlmittel, das durch Summenformel 1 wiedergegeben wird: C₃HₘFₙ, worin "m" und "n" ganze Zahlen gleich oder größer als 1 und gleich oder kleiner als 5 sind, und die Beziehung, die durch den Ausdruck m + n = 6 wiedergegeben ist, erfüllt ist, und eine einzelne Doppelbindung in der Molekülstruktur aufweist, 2,3,3,3-Tetrafluor-1-propen ist.

11. Kühlvorrichtung nach mindestens einem der Ansprüche 1 bis 10, wobei
das Kühlmittel des Kühlmittelkreislaufs (10) eine Kühlmittelmischung, die ferner Dichlormethan enthält, ist.

12. Kühlvorrichtung nach mindestens einem der Ansprüche 1 bis 11, wobei
das Kühlmittel des Kühlmittelkreislaufs (10) eine Kühlmittelmischung, die ferner Pentafluorethan enthält, ist.

13. Kühlvorrichtung nach mindestens einem der Ansprüche 1 bis 12, wobei
das Kühlmittel, das durch Summenformel 1 wiedergegeben wird: C₃HₘFₙ, worin "m" und "n" ganze Zahlen gleich oder größer als 1 und gleich oder kleiner als 5 sind, und eine Beziehung, die durch den Ausdruck m + n = 6 wiedergegeben ist, erfüllt ist, und eine einzelne Doppelbindung in der Molekülstruktur aufweist, 1,3,3,3-Tetrafluor-1-propen ist.

14. Kühlvorrichtung nach mindestens einem der Ansprüche 10 bis 13, wobei
das Kühlmittel des Kühlmittelkreislaufs (10) eine Kühlmittelmischung, die ferner FKW-227ea enthält, ist.

## Revendications

1. Appareil de réfrigération comprenant :
un circuit de réfrigérant (10), un réfrigérant circulant dans le circuit de réfrigérant (10) sous l'action d'un compresseur (30) pour effectuer un cycle de réfrigération,
dans lequel est utilisé, comme réfrigérant du circuit de réfrigérant (10), un réfrigérant représenté par la formule moléculaire 1 : C₃HₘFₙ, où « m » et « n » sont des entiers égaux ou supérieurs à 1 et égaux ou inférieurs à 5, et une relation représentée par une expression m + n = 6 est satisfaite ; et présentant une simple liaison double dans une structure moléculaire, ou un mélange de réfrigérants contenant le réfrigérant ;
des composants de résine fonctionnels prédéterminés (61, 62, 63, 64, 65) agencés de manière à venir en contact avec le réfrigérant du circuit de réfrigérant (10) sont constitués d'un quelconque parmi le polytétrafluoroéthylène, le poly(sulfure de phénylène), une résine phénolique, une résine de polyamide, du caoutchouc de chloroprène, du caoutchouc de silicone, du caoutchouc de nitrile hydrogéné, du caoutchouc contenant du fluor et du caoutchouc d'hydrine,
de l'huile réfrigérante est utilisée dans le compresseur (30), qui présente une quantité d'eau saturée égale ou supérieure à 2 000 ppm à une température de 30 °C et une humidité relative de 90 %,
l'huile réfrigérante contient principalement au moins un corps parmi le polyalkylèneglycol, un ester de polyol et de l'éther polyvinylique,
l'huile réfrigérante présente une tension superficielle égale ou supérieure à 0,02 N/m et égale ou inférieure à 0,04 N/m à 20 °C, et
l'huile réfrigérante contient un agent antioxydant de phénol ou un agent antioxydant d'amine.

2. Appareil de réfrigération selon la revendication 1, dans lequel
l'agent antioxydant de phénol contient un quelconque parmi : le 2,6-di-tert-butyl-4-méthylphénol (DBPC) ; le 2,6-di-tert-butyl-4-éthylphénol ; le 2,2'-méthylènebis(4-méthyl-6-tert-butylphénol) ; le 2,4-diméthyl-6-tert-butylphénol ; et le 2,6-di-tert-butylphénol.

3. Appareil de réfrigération selon la revendication 1, dans lequel
l'agent antioxydant de type amine contient une quelconque parmi : la N,N'-diisopropyl-p-phénylènediamine ; la N,N'-di-sec-butyl-p-phénylènediamine ; la phényl-α-naphtylamine ; et la N,N'-di-phényl-p-phénylènediamine.

4. Appareil de réfrigération selon l'une quelconque des revendications 1 à 3, dans lequel
la proportion de l'agent antioxydant est égale ou supérieure à 0,01 % en masse et égale ou inférieure à 5 % en masse.

5. Appareil de réfrigération selon l'une quelconque des revendications 1 à 4, dans lequel
les composants de résine fonctionnels sont des éléments coulissants (61, 62, 63, 64) prévus dans des sections de coulissement prédéterminées ; et
les éléments coulissants (61, 62, 63, 64) sont constitués d'un corps quelconque parmi le polytétrafluoroéthylène, le poly(sulfure de phénylène) et une résine de polyamide.

6. Appareil de réfrigération selon l'une quelconque des revendications 1 à 5, dans lequel
le composant de résine fonctionnel est un élément d'étanchéité (65) pour réduire ou empêcher une fuite de réfrigérant dans un espacement prédéterminé ; et
l'élément d'étanchéité (65) est constitué d'un quelconque parmi le polytétrafluoroéthylène, le poly(sulfure de phénylène), le caoutchouc de chloroprène, le caoutchouc de silicone, le caoutchouc de nitrile hydrogéné, le caoutchouc contenant du fluor et le caoutchouc d'hydrine.

7. Appareil de réfrigération selon l'une quelconque des revendications 1 à 5, dans lequel
l'huile réfrigérante présente une viscosité cinétique égale ou supérieure à 30 cSt et égale ou inférieure à 400 cSt à 40 °C, et un point d'écoulement égal ou inférieur à -30 °C.

8. Appareil de réfrigération selon l'une quelconque des revendications 1 à 7, dans lequel
l'huile réfrigérante présente une concentration en chlore égale ou inférieure à 50 ppm.

9. Appareil de réfrigération selon l'une quelconque des revendications 1 à 8, dans lequel
l'huile réfrigérante présente une concentration en soufre égale ou inférieure à 50 ppm.

10. Appareil de réfrigération selon l'une quelconque des revendications 1 à 9, dans lequel
le réfrigérant représenté par la formule moléculaire 1 : C₃HₘFₙ, où « m » et « n » sont les entiers égaux ou supérieurs à 1 et égaux ou inférieurs à 5, et la relation représentée par l'expression m + n = 6 est satisfaite, et présentant la liaison simple double dans la structure moléculaire est le 2,3,3,3-tétrafluoro-1-propène.

11. Appareil de réfrigération selon l'une quelconque des revendications 1 à 10, dans lequel
le réfrigérant du circuit de réfrigérant (10) est un mélange de réfrigérants contenant en outre du difluorométhane.

12. Appareil de réfrigération selon l'une quelconque des revendications 1 à 11, dans lequel
le réfrigérant du circuit de réfrigérant (10) est un mélange de réfrigérants contenant en outre du pentafluorométhane.

13. Appareil de réfrigération selon l'une quelconque des revendications 1 à 12, dans lequel
le réfrigérant représenté par la formule moléculaire 1 : C₃HₘFₙ, où « m » et « n » sont les entiers égaux ou supérieurs à 1 et égaux ou inférieurs à 5, et une relation représentée par l'expression m + n = 6 est satisfaite, et présentant une liaison simple double dans une structure moléculaire est le 1,3,3,3-tétrafluoro-1-propène.

14. Appareil de réfrigération selon l'une quelconque des revendications 10 à 13, dans lequel
le réfrigérant du circuit de réfrigérant (10) est un mélange de réfrigérants contenant en outre HFC-227ea.
